# EUROPÄISCHE PATENTSCHRIFT

(11) **EP 2 740 345 B1**
(45) Veröffentlichungstag und Bekanntmachung des Hinweises auf die Patenterteilung: **25.11.2015**
(21) Anmeldenummer: 13194852.3
(22) Anmeldetag: 28.11.2013
(51) Int. Cl.: A01D 41/14

(54) **Vorsatzmähtisch für eine Erntemaschine**
Harvesting header
Plateforme de coupe pour moissoneuse

(30) Priorität: 04.12.2012 DE 102012111766
(43) Veröffentlichungstag der Anmeldung: 11.06.2014
(73) Patentinhaber: Martin Ziegler GmbH & Co. KG, 86554 Pöttmes (DE)
(72) Erfinder: Daferner, Gerhard, 86554 Pöttmes (DE); Frinzl, Richard, 86529 Schrobenhausen (DE)
(74) Vertreter: Charrier, Rapp & Liebau

(56) Entgegenhaltungen:
- DE-A1- 19 632 895
- DE-C1- 4 428 857
- DE-U1- 9 422 102

## Beschreibung

Die Erfindung betrifft einen Vorsatzmähtisch nach dem Oberbegriff des Anspruchs 1.

Es ist bekannt, zum Ernten bestimmter Nutzpflanzen wie Raps an eine Erntemaschine, insbesondere einen Mähdrescher, frontseitig einen Vorsatzmähtisch anzubauen, um den Aufnahmeraum für die geschnittenen Pflanzen in Fahrtrichtung der Erntemaschine zu vergrößern und dadurch die Ernteausbeute zu steigern. Üblicherweise erfolgt die Befestigung eines solchen Vorsatzmähtisches über vertikale Seitenteile, welche den Aufnahmeraum für die geschnittenen Pflanzen in seitlicher Richtung begrenzen, an Rahmenteilen der Erntemaschine.

Zur Verwendung eines Vorsatzmähtisches gemäß DE 196 32 895 A1 an einer Erntemaschine eines bestimmten Typs bedarf es einer individuellen Anpassung des Vorsatzmähtisches, insbesondere hinsichtlich der zur Montage an der Erntemaschine vorzusehenden Komponenten, sowie hinsichtlich der Breite, die der Arbeitsbreite der Erntemaschine entsprechen muss. Um einen Vorsatzmähtisch für eine große Anzahl verschiedener Erntemaschinen auf dem Markt anzubieten, sieht sich ein Hersteller deshalb mit der Notwendigkeit konfrontiert, für die verschiedenen Erntemaschinen eine entsprechend große Anzahl von individuellen Varianten eines Vorsatzmähtisches herzustellen, was den Aufwand und die Kosten der Fertigung sowie der Lagerhaltung erhöht.

Aus der DE 10 2010 028 605 A1 ist die Befestigung eines Erntevorsatzes an einem Einzugsgehäuse einer Erntemaschine über einen Zwischenrahmen bekannt, der gegenüber dem Einzugsgehäuse über Rollen um eine sich in Vorwärtsrichtung der Erntemaschine erstreckende Achse beweglich gelagert ist und somit einen Pendelrahmen bildet. Er umgibt die gesamte Vorderseite des Einzugsgehäuses.

Aus der DE 20 2007 011 411 U1 ist ein Adapter für die Anpassung eines Schneidwerkzeugs an ein Zerkleinerungswerkzeug einer Erntemaschine in Form eines Gehäusekastens bekannt, welcher einer Mehrzahl von Rahmen für die Stirnwand und/oder die Rückwand aufweist, die in ihren Abmessungen und Verbindungsvorrichtungen dem jeweils gewählten Schneid- bzw. Zerkleinerungswerkzeug angepasst und mit einem Gehäuserahmen des Adapters lösbar verbindbar sind. Der Adapter umgibt die gesamte Einzugsöffnung des Zerkleinerungswerkzeugs.

Solche rahmenförmigen Adapter haben einen relativ komplexen Aufbau, der entsprechende Kosten verursacht, sowie große Abmessungen und ein damit ein entsprechend hohes Gewicht, was die Handhabung bei der Montage und Demontage erschwert.

In Anbetracht des Standes der Technik ist es die Aufgabe der Erfindung, einen einfachen Weg zur Herstellung eines an verschiedenen Erntemaschinen verwendbaren Vorsatzmähtisches aufzuzeigen.

Diese Aufgabe wird erfindungsgemäß durch einen Vorsatzmähtisch mit den Merkmalen des Anspruchs 1 gelöst. Vorteilhafte Ausgestaltungen sind in den Unteransprüchen angegeben.

Erfindungsgemäß weist bei einem Vorsatzmähtisch für eine Erntemaschine, mit einem Horizontalteil, an dessen Frontseite ein horizontales Schneidwerk angeordnet ist, und mit zwei vertikalen Seitenteilen, über welche der Vorsatzmähtisch mit der Erntemaschine verbindbar ist, ein Seitenteile jeweils einen seitlichen Tragrahmen mit einem Eingriffsabschnitt auf, der zum Eingriff mit einem Vorsprung eines Tragrahmens der Erntemaschine bestimmt ist. Einem seitlichen Tragrahmen ist jeweils mindestens ein Adapterstück zugeordnet, das an dem Eingriffsabschnitt befestigbar ist und dessen Form so an die Formen des Eingriffsabschnitts und des Vorsprungs angepasst ist, dass es im montierten Zustand des Vorsatzmähtisches an der Erntemaschine eine Auflagefläche für den Vorsprung bildet.

Hierdurch ist es möglich, ein und dieselben Seitenteile zur Montage eines Vorsatzmähtisches an einer Vielzahl unterschiedlicher Erntemaschinen mit unterschiedlichen Formen des Vorsprungs am vorderen Endes des Tragrahmens, der zur Befestigung eines Vorsatzmähtisches zur Verfügung steht, zu verwenden. Die Anpassung zwischen den Eingriffsabschnitten der Seitenteile des Vorsatzmähtisches und den Vorsprüngen des Tragrahmens der Erntemaschine erfolgt allein durch die Adapterstücke, die Formunterschiede zwischen den Eingriffsabschnitten und den Vorsprüngen so ausgleichen, dass an den Seitenteilen des Vorsatzmähtisches passende Auflageflächen für die Vorsprünge zur Verfügung stehen und der Vorsatzmähtisch somit sicher und spielfrei an der Erntemaschine montiert werden kann. Es können dann universelle Seitenteile verwendet werden, die nicht an eine bestimmte Erntemaschine angepasst werden müssen, was die Herstellung des Vorsatzmähtisches insgesamt erheblich vereinfacht und eine Kostenersparnis ermöglicht.

Besonders zweckmäßig ist es, wenn der Eingriffsabschnitt eines Seitenteils zwei Rahmenteile aufweist, die zusammen einen keilförmigen oder keilstumpfförmigen Aufnahmeraum mit einem Öffnungswinkel für den Vorsprung des Rahmens der Erntemaschine definieren, und wenn das Adapterstück die Form eines Keils oder Keilstumpfes hat und der Öffnungswinkel des Aufnahmeraumes durch die Befestigung des Adapterstücks an dem Eingriffsabschnitt veränderbar ist. Um einen keilförmigen Aufnahmeraum im Tragrahmen eines Seitenteils an ein ebenfalls keilförmiges Gegenstück mit anderem Keilwinkel am Tragrahmen der Erntemaschine anzupassen, wird nämlich lediglich ein keilförmiges Adapterstück benötigt, dessen Keilwinkel gerade den Winkelunterschied zwischen den beiden Keilformen ausgleicht.

Obgleich in Grundsatz ein einziges Adapterstück in jedem Seitenteil des erfindungsgemäßen Vorsatzmähtisches ausreichen würde, um den seitlichen Tragrahmen des Seitenteils an den Tragrahmen einer Erntemaschine anzupassen, ist es von Vorteil, wenn einem seitlichen Tragrahmen jeweils zwei Adapterstücke zugeordnet sind, von denen jedes einem anderen der beiden Rahmenteile, welche den Aufnahmeraum definieren, zugeordnet ist. Hierdurch ergeben sich zusätzliche Freiheitgrade der Modifikation des Aufnahmeraumes, die eine optimale Positionierung des Vorsatzmähtisches an der Erntemaschine erlauben.

Eine besonders einfache und daher vorteilhafte Ausbildung eines erfindungsgemäßen Adapterstücks besteht aus zwei Grundplatten und zwei trapezförmige Verbindungsplatten, welche die Grundplatten miteinander verbinden, wobei die Grundplatten in einem Winkel zueinander geneigt sind und die Verbindungsplatten durch ihre Trapezform den Neigungswinkel zwischen den Grundplatten definieren.

Indem bei mindestens einem Adapterstück ein entlang einer Verbindungsplatte verlaufender Fortsatz einer Grundplatte seitlich über die ihm benachbarte Verbindungsplatte hinausragt und sich schräg zu dem übrigen Abschnitt der Grundplatte erstreckt, wobei er in einem Winkel von über 90° zu der ihm benachbarten Verbindungsplatte steht, wird es ermöglicht, dass der Vorsatzmähtisch beim Einführen des Vorsprungs des Rahmens der Erntemaschine in den Aufnahmeraum eines Seitenteils des Vorsatzmähtisches im Fall eines geringfügigen seitlichen Versatzes gegenüber der Erntemaschine automatisch seitlich in die richtige Position verschoben wird. Um eine automatische Zentrierung in seitlicher Richtung zu erreichen, ist es zweckmäßig, wenn an jedem der zwei Seitenteile jeweils ein Adapterstück mit einem seitlich schräg über eine der Verbindungsplatten hinausragenden Fortsatz an der Oberseite des ersten Eingriffsabschnitts vorgesehen ist, wobei sich der schräg hinausragende Abschnitt im fertig montierten Zustand an der unteren Grundplatte befindet und zur Außenseite des Seitenteils sowie nach unten weist.

Zum Fixieren eines Eingriffsabschnitts eines seitlichen Tragrahmens eines Seitenteils des erfindungsgemäßen Vorsatzmähtisches im Kontakt mit dem zugehörigen Vorsprung des Tragrahmens der Erntemaschine eignet sich besonders eine Haltevorrichtung mit einem Zugmittel in Form einer Kette oder eines Seils, einem zum Eingriff mit dem Tragrahmen der Erntemaschine geeigneten Haken und einer Spannvorrichtung zum Spannen des Zugmittels. Ein Einsatz von Werkzeugen zum Befestigen des erfindungsgemäßen Vorsatzmähtisches an der Erntemaschine erübrigt sich in diesem Fall.

Weiterhin kann bei einem erfindungsgemäßen Vorsatzmähtisch für eine Erntemaschine das Horizontalteil aus einer Vielzahl von miteinander verbundenen Modulen bestehen, wobei zumindest mehrere Grundmodule fester Breite vorgesehen sind und zusätzlich zu den Grundmodulen ein oder mehrere Erweiterungsmodule variabler Breite vorgesehen sein können, wodurch die Summe der Breiten der Grundmodule eine Mindestbreite des Horizontalteils definiert und die Breite des Horizontalteils allein durch die Anzahl und/oder Breite der Erweiterungsmodule einstellbar ist. Durch einen solchen modularen Aufbau des Horizontalteils ergibt sich ein Baukastensystem, das die Realisierung einer Vielzahl von Vorsatzmähtischen unterschiedlicher Breite mit geringem Aufwand erlaubt. Es werden nur wenige Erweiterungsmodule spezieller Breite benötigt, um die Gesamtbreite an diejenige einer beliebigen Erntemaschine anzupassen, während das Horizontalteil überwiegend aus Standardkomponenten fester Breite besteht. Die Herstellung eines Vorsatzmähtisches wird hierdurch deutlich vereinfacht.

Zu den Grundmodulen gehören vorzugsweise zumindest zwei seitliche Endmodule, die jeweils mit den beiden vertikalen Seitenteilen verbunden sind sowie ein Mittelmodul, das symmetrisch in der Mitte des Horizontalteils angeordnet ist. Zwei gleichartige Erweiterungsmodule können jeweils zwischen dem Mittelmodul und jedem der zwei Endmodule vorgesehen sein. Hierdurch wird der Aufbau des Horizontalteils symmetrisch und die Grundmodule haben relativ kompakte Abmessungen, was den Transport der Module vereinfacht.

Wenn der erfindungsgemäße Vorsatzmähtisch für das horizontale Schneidwerk und/oder zusätzliche vertikale, an den Seitenteilen montierbare Schneidwerke einen hydraulischen Antrieb aufweist, dann ist es vorteilhaft, wenn die Leitungen zur Verbindung von Komponenten des hydraulischen Antriebs in Form von Hochdruckschläuchen ausgeführt sind, da sich bei der Anpassung des Vorsatzmähtisches an unterschiedliche Erntemaschinen unterschiedliche Leitungslängen der Hydraulikleitungen ergeben, die am einfachsten durch Verwendung von Hochdruckschläuchen realisierbar sind, da Hochdruckschläuche nicht nur in unterschiedlichen Längen erhältlich sind, sondern ein Längenausgleich in gewissem Maße auch durch die Verlegung erfolgen kann.

Die Anordnung flexibler Dichtlippen an den Übergängen vom Horizontalteil zu den Seitenteilen vereinfacht den Zusammenbau des erfindungsgemäßen Vorsatzmähtisches, indem sie eine zuverlässige Abdichtung an dieser Stelle auch bei einer relativ großen Spaltbreite gewährleistet.

Nachfolgend werden Ausführungsbeispiele der Erfindung anhand der Zeichnungen beschrieben. In diesen zeigt
- Fig. 1: einen erfindungsgemäßen Vorsatzmähtisch in einer perspektivischen Gesamtansicht,
- Fig. 2: den Tragrahmen des Horizontalteils des Vorsatzmähtisches von Fig. 1,
- Fig. 3: ein in dem Tragrahmen nach Fig. 2 enthaltenes seitliches Endmodul,
- Fig. 4: ein in dem Tragrahmen nach Fig. 2 enthaltenes Mittelmodul,
- Fig. 5: ein in dem Tragrahmen nach Fig. 2 optional montierbares Ergänzungsmodul,
- Fig. 6: den Tragrahmen und die Innenverkleidung eines Seitenteils des Vorsatzmähtisches von Fig. 1,
- Fig. 7: den Tragrahmen und die Innenverkleidung des anderen Seitenteils des Vorsatzmähtisches von Fig. 1 mit zwei Adapterstücken und einer Haltevorrichtung,
- Fig. 8: zwei Ansichten eines der Adapterstücke von Fig. 7 und
- Fig. 9: zwei Ansichten des anderen Adapterstücks von Fig. 7.

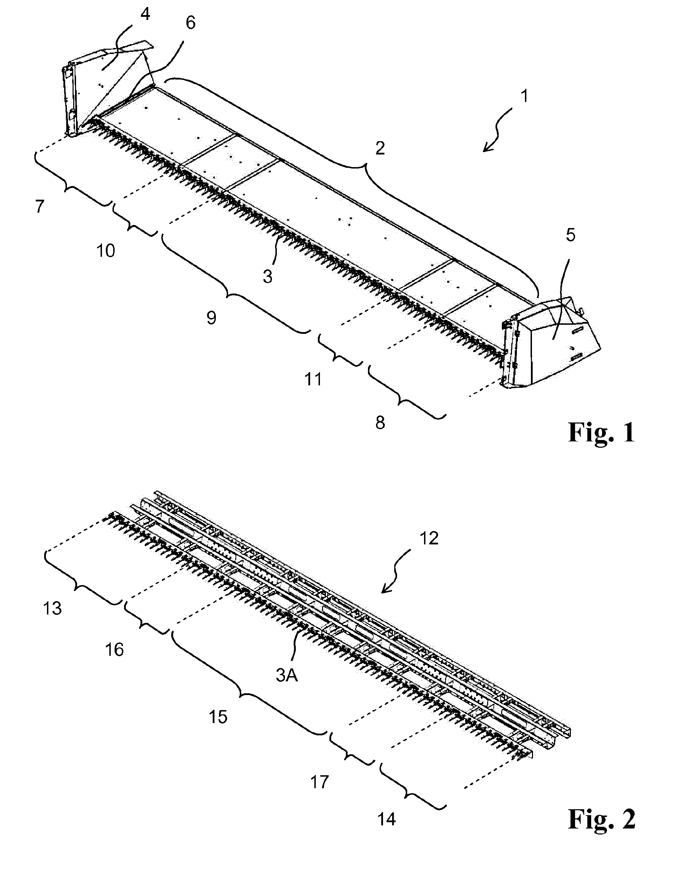

Fig.1 zeigt einen erfindungsgemäßen Vorsatzmähtisch 1 zum frontseitigen Anbau an eine Erntemaschine, der insbesondere zum Ernten von Raps vorgesehen ist und daher auch als Rapstisch bezeichnet wird. Er besteht aus einem Horizontalteil 2 mit einem frontseitigen Schneidwerk 3 und aus zwei vertikalen Seitenteilen 4 und 5. Am Übergang zum Horizontalteil 2 ist an den Seitenteilen 4 und 5 jeweils eine flexible Dichtlippe 6 angebracht, die den dortigen Spalt abdichtet. Das Horizontalteil 2 setzt sich aus mehreren Modulen zusammen, nämlich aus zwei seitlichen Endmodulen 7 und 8, an die sich jeweils unmittelbar die beiden vertikalen Seitenteile 4 bzw. 5 anschließen, aus einem Mittelmodul 9, welches sich mittig zwischen den beiden Endmodulen 7 und 8 befindet, sowie aus zwei Erweiterungsmodulen 10 und 11, die jeweils zwischen dem Mittelmodul 9 und den beiden Endmodulen 7 und 8 angeordnet sind.

Während die beiden Endmodule 7 und 8 und das Mittelmodul 9 stets vorhanden sind, handelt es sich bei den Erweiterungsmodulen 10 und 11 um optionale Komponenten, die nicht unbedingt vorhanden sein müssen. Falls keine Erweiterungsmodule 10 und 11 vorgesehen sind, werden die beiden Endmodule 7 und 8 unmittelbar durch das Mittelmodul 9 verbunden. In diesem Fall hat der erfindungsgemäße Vorsatzmähtisch 1 seine minimal mögliche Breite, die durch die Summe der Breiten der beiden Endmodule 7 und 8 sowie des Mittelmoduls 9 vorgegeben ist. Die Breiten dieser Module 7, 8 und 9 sind fest und können nicht variiert werden.

Zur Anpassung der Breite des gesamten Horizontalteils 2 an die Arbeitsbreite einer Erntemaschine, an welche der Vorsatzmähtisch 1 angebaut werden soll, dienen die beiden Erweiterungsmodule 10 und 11. Deren Breite ist variabel, d.h. je nach Arbeitsbreite der Erntemaschine werden zwei Erweiterungsmodule 10 und 11 passender Breite aus einer Vielzahl von solchen Modulen unterschiedlicher Breite passend ausgewählt und zwischen den beiden Endmodulen 7 und 8 und dem Mittelmodul 9 eingebaut. Die beiden Erweiterungsmodule 10 und 11 sind untereinander vollkommen gleich, d.h. es wird zur Realisierung einer bestimmten Breite des Horizontalteils 2 außer den beiden Endmodulen 7 und 8 und dem Mittelmodul 9 nur ein einziger zusätzlicher Typ eines Moduls in doppelter Ausführung für die beiden Erweiterungsmodule 10 und 11 benötigt.

Das Horizontalteil 2 besteht aus einem Tragrahmen 12, wie er in Fig. 2 dargestellt ist und einer Verkleidung, welche den Tragrahmen 12 zumindest auf seiner Oberseite abdeckt. In Fig. 2 ist der Tragrahmen 12 des Horizontalteils 2 ohne Verkleidung und ohne die Seitenteile 4 und 5 zu sehen. Er besteht aus zwei Rahmenendmodulen 13 und 14, einem Rahmenmittelmodul 15 und zwei Rahmenerweiterungsmodulen 16 und 17. Die einzelnen Module 13 bis 17 des Tragrahmens 12 überlappen sich in der Breite und jeweils zwei einander benachbarte Module sind im Bereich ihrer Überlappung miteinander verschraubt. Ein feststehender Teil 3A des Horizontalschneidwerks 3 ist an dem Tragrahmen 12 montiert.

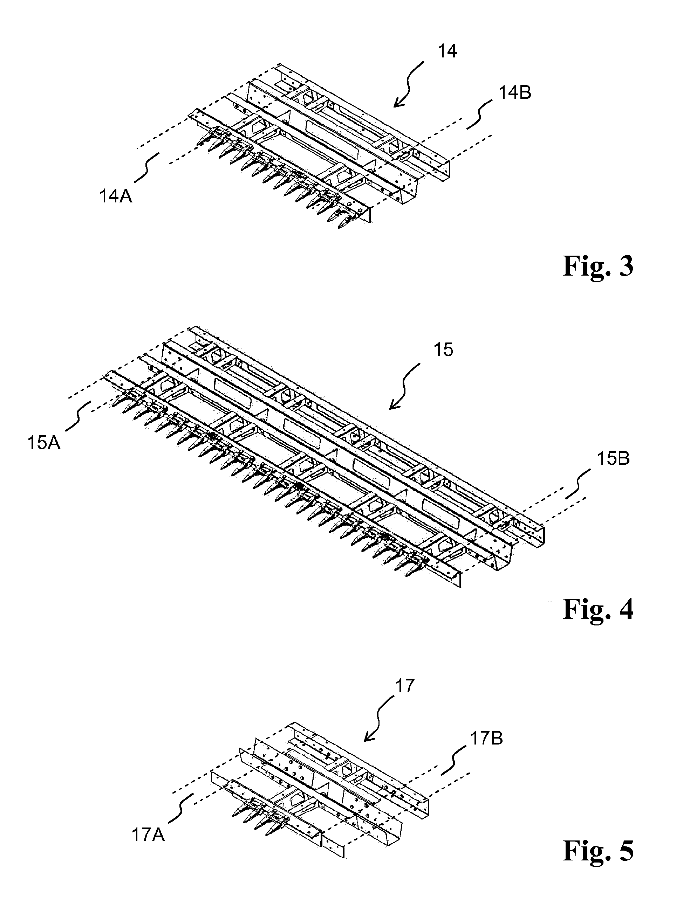

Das in Arbeitsrichtung des Vorsatztisches 1 gesehen linke Rahmenendmodul 14 des Tragrahmens 12 ist in Fig. 3 separat gezeigt. Dort ist der Überlappungsbereich 14A gekennzeichnet, in dem das Rahmenendmodul 14 bei der Montage des Tragrahmens 12 mit einem entsprechenden Bereich des benachbarten Rahmenerweiterungsmoduls 17 übereinandergelegt und mit diesem durch Schrauben verbunden wird. Die hierzu nötigen Bohrungen sind in Fig. 3 durch eine Vielzahl von Punkten in dem Überlappungsbereich 14A angedeutet. Ebenfalls gekennzeichnet ist in Fig. 3 ein gegenüberliegender Überlappungsbereich 14B, in dem das Rahmenendmodul 14 beim Zusammenbau mit dem Seitenteil 5 mit von diesem abragenden Trägerprofilen übereinandergelegt und mit diesem durch Schrauben verbunden wird. Die hierzu nötigen Bohrungen sind in Fig. 3 ebenfalls durch eine Vielzahl von Punkten in dem Überlappungsbereich 14B angedeutet.

Das Rahmenmittelmodul 15 ist in Fig. 4 separat gezeigt. Dort sind an beiden Enden Überlappungsbereiche 15A und 15B gekennzeichnet, in denen das Rahmenendmodul 15 bei der Montage des Tragrahmens 12 mit entsprechenden Bereichen der benachbarten Rahmenerweiterungsmodule 16 und 17 übereinandergelegt und mit diesen durch Schrauben verbunden wird. Die hierzu nötigen Bohrungen sind in Fig. 4 durch eine Vielzahl von Punkten in den Überlappungsbereichen 15A und 15B angedeutet.

Ein Rahmenerweiterungsmodul 17 ist in Fig. 5 separat gezeigt. Dort sind an beiden Enden Überlappungsbereiche 17A und 17B gekennzeichnet, in denen das Rahmenerweiterungsmodul 17 bei der Montage des Tragrahmens 12 mit entsprechenden Bereichen des benachbarten Rahmenmittelmoduls 15 und des Rahmenendmoduls 14 übereinandergelegt und mit diesem durch Schrauben verbunden wird. Die hierzu nötigen Bohrungen sind in Fig. 5 durch eine Vielzahl von Punkten in den Überlappungsbereiche 17A und 17B angedeutet.

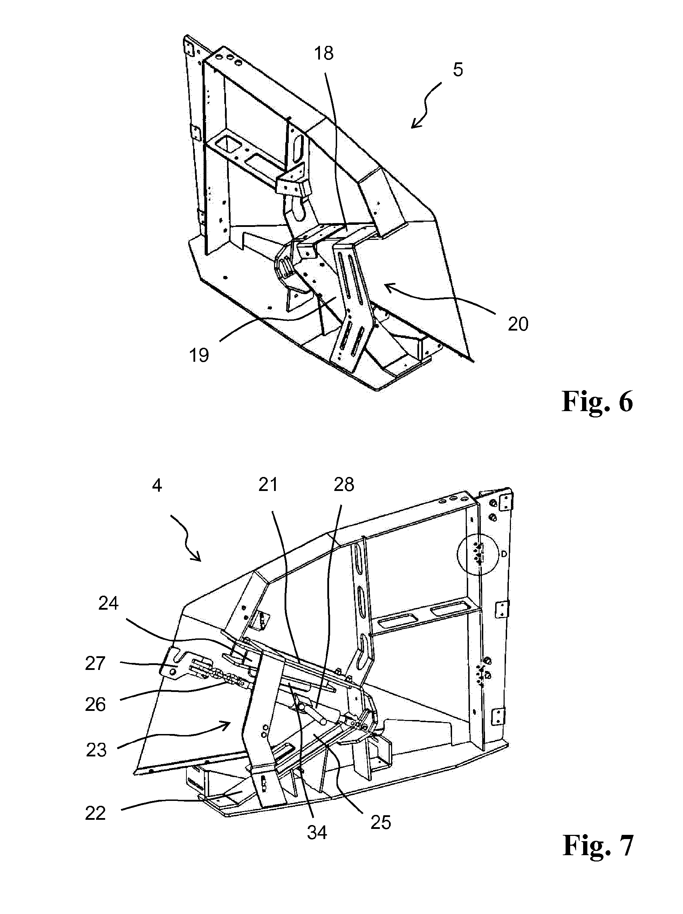

Wie aus den Figuren 2 bis 5 hervorgeht, verteilt sich der feststehende Teil 3A des Horizontalschneidwerks 3 ebenfalls auf die einzelnen Module 13 bis 17 des Tragrahmens 12. In den Figuren 3 bis 5 sind die einzelnen Abschnitte des feststehenden Teils 3A des Horizontalschneidwerks noch nicht fertig montiert, d.h. es fehlen dort noch Teile davon in den Überlappungsbereichen 14A, 15A, 15B, 17A und 17B. Im fertig montierten Zustand ist der feststehende Teil 3A des Horizontalschneidwerks 3 selbstverständlich ohne Lücken, wie es in Fig. 2 zu sehen ist. Zu dem Horizontalschneidwerk 3 gehört noch ein in seitlicher Richtung reversierendes Messer, das ebenfalls modular aufgebaut ist und aus mehreren einzelnen Abschnitten besteht, die miteinander verbunden sind. Dieses in den Figuren nicht sichtbare Messer braucht nicht in ebenso viele Module entsprechender Breite aufgeteilt zu sein wie der Tragrahmen 12 des Horizontalteils 2, sondern die Anzahl der Abschnitte des Messers und deren Länge kann von der Moduleinteilung des Tragrahmens 12 abweichen. Das in Arbeitsrichtung des Vorsatzmähtisches 1 gesehen linke Seitenteil 5 ist in Fig. 6 von schräg von außen ohne den äußeren Teil der Verkleidung gezeigt. Wie dort zu erkennen ist, weist das Seitenteil 5 im Inneren einen Tragrahmen auf, der aus einer Reihe von miteinander verbundenen Blechen besteht. Zwei Rahmenteile 18 und 19 stehen schräg zueinander und bilden zusammen einen nach hinten offenen keilförmigen Hohlraum 20. Der Hohlraum 20 ist zur Aufnahme eines ebenfalls keilförmig ausgebildeten vorderen Vorsprungs des Rahmens einer Erntemaschine bei der Montage des Vorsatzmähtisches 1 an der Erntemaschine bestimmt. Die Rahmenteile 18 und 19 stellen also zusammen einen Eingriffsabschnitt des Tragrahmens des Seitenteils 5 dar, der sich im montierten Zustand des Vorsatzmähtisches 1 im Kontakt mit einem Vorsprung des Rahmens einer Erntemaschine befindet und die Form eines Hohlkeilstumpfes hat.

Um einen flächigen Kontakt der einen Eingriffsabschnitt 18, 19 bildenden Rahmenteile 18 und 19 des Seitenteils 5 mit dem Vorsprung des Rahmens der Erntemaschine und damit einen sicheren Halt des Vorsatzmähtisches 1 an der Erntemaschine zu gewährleisten, ist es eigentlich nötig, dass der Keilwinkel des Eingriffsabschnitts 18, 19 am Seitenteil 5 und des in den Figuren nicht sichtbaren Vorsprungs des Rahmens der Erntemaschine übereinstimmen, wozu der Eingriffsabschnitt 18, 19 individuell für jede einzelne Erntemaschine, an welcher der Vorsatzmähtisch 1 angebaut werden soll, modifiziert werden müsste. Wie dies erfindungsgemäß vermieden wird, zeigt Fig. 7, bei der es sich um eine Ansicht des anderen, also des rechten Seitenteils 4 schräg von außen ohne den äußeren Teil der Verkleidung handelt.

Wie bei einer vergleichenden Betrachtung der Figuren 6 und 7 ohne weiteres erkennbar ist, ist das rechte Seitenteil 4 spiegelbildlich zu dem linken Seitenteil 5 aufgebaut. Auch hier bilden zwei Rahmenteile 21 und 22 einen Eingriffsabschnitt 21, 22, der einen Hohlraum 23 in Form eines Keilstumpfes für die Aufnahme eines Vorsprungs des Tragrahmens einer Erntemaschine bildet. Um den Keilwinkel des Hohlraumes 23 an denjenigen des Vorsprungs des Tragrahmens der Erntemaschine anzupassen, ist an dem oberen Rahmenteil 21 ein keilförmiges Adapterstück 24 und an dem unteren Rahmenteil 22 ein ebenfalls keilförmiges Adapterstück 25 befestigt. Nur die Adapterstücke 24 und 25 sind auf die Form des Vorsprungs des Rahmens einer bestimmten Erntemaschine zugeschnitten, während das Seitenteil 4 universell für alle Erntemaschinen verwendbar ist und nicht individuell angepasst zu werden braucht.

In Fig. 7 ist noch eine Vorrichtung zum Halten des Seitenteils 4 an einer Erntemaschine gezeigt, die aus einer an dem Tragrahmen des Seitenteils 4 befestigten Kette 26 mit einem Haken 27 am freien Ende und einer Spannvorrichtung 28 besteht. Wenn der Vorsatzmähtisch 1 auf den Rahmen der Erntemaschine so aufgesetzt wurde, dass der maschinenseitige Rahmenvorsprung in den Aufnahmeraum 23 hineinragt und dort auf den Adapterstücken 24 und 25 aufliegt, dann kann der Haken 27 an einer dafür vorgesehenen Stelle in den Tragrahmen der Erntemaschine eingehängt und anschließend die Kette 26 mittels der Spannvorrichtung 28 gespannt werden. Auf dieselbe Weise wird auch das andere Seitenteil 5 an die Erntemaschine gespannt, womit der Vorsatzmähtisch 1 insgesamt an der Erntemaschine befestigt werden kann, ohne dass dazu Werkzeuge benötigt werden. Die identische Haltevorrichtung des anderen Seitenteils 5 ist in Fig. 6, die nur den Tragrahmen und die innere Verkleidung des Seitenteils 5 zeigt, nicht zu sehen, aber sie ist dort vorgesehen. Letzeres gilt auch für Adapterstücke an den Rahmenteilen 18 und 19.

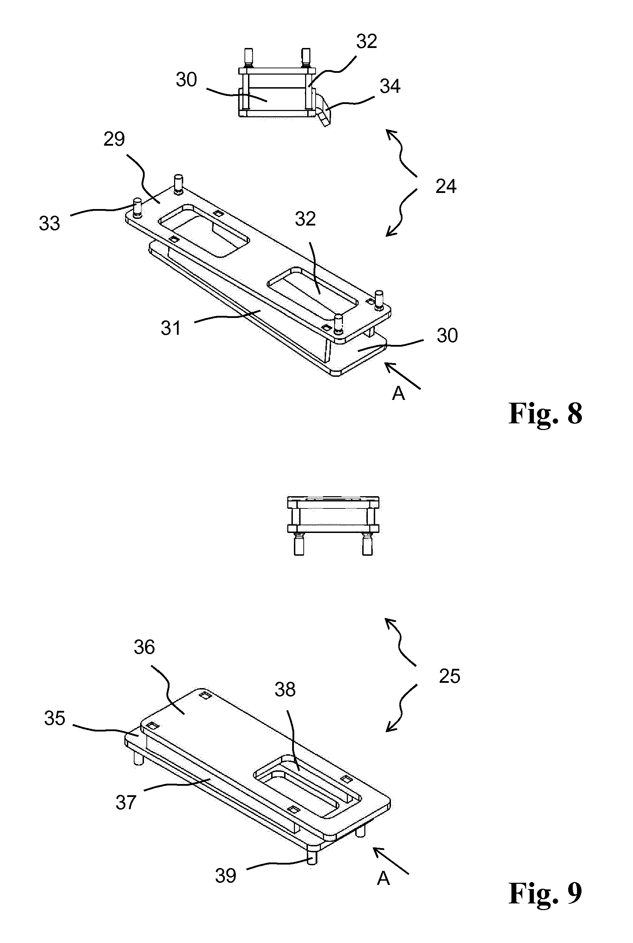

Detailansichten der Adapterstücke 24 und 25 in Fig. 7 zeigen die Figuren 8 und 9. Wie Fig. 8 erkennen lässt, besteht das obere Adapterstück 24 aus vier ebenen Platten, nämlich einer oberen Grundplatte 29 und einer unteren Grundplatte 30, die durch zwei gleiche trapezförmige Verbindungsplatten 31 und 32 miteinander verbunden und vorzugsweise mit diesen Verbindungsplatten 31 und 32 verschweißt sind. Die Verbindungsplatten 31 und 32 stehen parallel zueinander und senkrecht zu den Grundplatten 29 und 30, deren Neigungswinkel zueinander sie durch ihre Trapezform definieren. Insgesamt hat das Adapterstück 24 die Form eines Keilstumpfes. In den vier Ecken der oberen Grundplatte 29 sind Gewindebolzen 33 angebracht, mittels derer das Adapterstück 24 an dem oberen Rahmenteil 21 des Eingriffsabschnitts 21, 22 befestigt werden kann. Diese Befestigung des Adapterstücks 24 ist auch in Fig. 7 erkennbar.

Die obere Ansicht in Fig. 8 zeigt das obere Adapterstück 24 in einer Ansichtsrichtung, welche der Richtung des Pfeiles A in der unteren Ansicht entspricht. Dort ist ein Fortsatz 34 der unteren Platte 30 erkennbar, der sich schräg über die Verbindungsplatte 32 hinaus erstreckt und mit dieser einen Winkel von über 90° bildet. In Fig. 7 ist dieser Fortsatz 34 ebenfalls erkennbar. Im fertig montierten Zustand des Seitenteils 4 befindet sich das Adapterstück 24 an dem oberen Rahmenteil 21 des Eingriffsabschnitts 21, 22 und die Grundplatte 30 an der Unterseite des Adapterstücks 24, so dass bei der Montage des Vorsatzmähtisches 1 an einer Erntemaschine die Unterseite der Grundplatte 30 die Kontaktfläche für die Oberseite des Vorsprungs der rechten Seite des Rahmens der Erntemaschine darstellt. Der Fortsatz 34 erstreckt sich folglich im fertig montierten Zustand des Seitenteils 4 schräg nach außen und zugleich nach unten.

Wenn die Erntemaschine zur Montage des Vorsatzmähtisches 1 an den hierzu bereitliegenden Vorsatzmähtisch 1 heranfährt und der rechte Vorsprung des Tragrahmens der Erntemaschine in den keilstumpfförmigen Hohlraum 23 eintaucht, dann wird der keilförmige Rahmenvorsprung der Erntemaschine in Fahrtrichtung der Erntemaschine automatisch zwischen den Adapterstücken 24 und 25 zentriert. Für eine Zentrierung quer zur Fahrtrichtung sorgt der Fortsatz 34, indem der Vorsatzmähtisch 1 schwerkraftbedingt nach rechts gleitet, falls er sich beim Kontakt des rechten Rahmenvorsprungs der Erntemaschine mit dem Adapterstück 24 nicht in einer mittigen Position zu der Erntemaschine befindet, sondern nach links versetzt sein sollte, weil dann der Kontakt nicht an der ebenen Unterseite der Grundplatte 30, sondern an dem schrägen Fortsatz 34 erfolgt.

Das in den Figuren nicht gezeigte obere Adapterstück an dem linken Seitenteil 5 weist einen entsprechenden Fortsatz auf, der sich spiegelbildlich zu dem Fortsatz 34, also ebenfalls schräg nach außen und zugleich nach unten erstreckt und somit schwerkraftbedingt für eine Verschiebung des Vorsatzmähtisches 1 nach links sorgt, falls dieser gegenüber der Erntemaschine nicht mittig, sondern nach rechts versetzt positioniert sein sollte. Insgesamt bewirken der Fortsatz 34 an dem oberen Adapterstück 24 in dem rechten Seitenteil 4 und der korrespondierende Fortsatz an dem oberen Adapterstück in dem linken Seitenteil 5 somit auch eine automatische Zentrierung des Vorsatzmähtisches 1 an der Erntemaschine in lateraler Richtung, wenn sich die Erntemaschine mit den Vorsprüngen ihres Tragrahmens in die Aufnahmeräume 20 und 23 der Seitenteile 4 und 5 des Vorsatzmähtisches 1 hinein bewegt.

In Fig. 9 ist noch das untere Adapterstück 25 in zwei Ansichten dargestellt, von denen die Ansichtsrichtung der oberen Ansicht der Richtung des Pfeiles A in der unteren Ansicht entspricht. Man erkennt, dass der Aufbau aus zwei Grundplatten 35 und 36 sowie zwei Verbindungsplatten 37 und 38 der gleiche ist wie bei dem oberen Adapterstück 24, die Abmessungen der Grundplatten 35 und 36 und deren Neigungswinkel zueinander jedoch gegenüber dem Adapterstück 24 abweichen. Der Neigungswinkel ist hier wesentlich geringer und die Richtung der Neigung ist entgegengesetzt, d.h. das untere Adapterstück 25 trägt im Gegensatz zum oberen Adapterstück 24 im montierten Zustand nicht zu einer Verringerung des Keilwinkels des Aufnahmeraumes 23 bei, sondern stattdessen zu einer Vergrößerung.

Im fertig montierten Zustand des Seitenteils 4 befindet sich das Adapterstück 25 an dem unteren Rahmenteil 22 des Eingriffsabschnitts 21, 22 und die Grundplatte 36 an der Oberseite des Adapterstücks 25, so dass bei der Montage des Vorsatzmähtisches 1 an einer Erntemaschine die Oberseite der Grundplatte 36 die Kontaktfläche für die Unterseite des Vorsprungs der rechten Seite des Rahmens der Erntemaschine darstellt. Zur Befestigung an dem unteren Rahmenteil 22 des Eingriffsabschnitts 21, 22 ist auch das untere Adapterstück 25 mit Gewindebolzen 39 ausgestattet.

Die zwei hier nicht gezeigten Adapterstücke des anderen Seitenteils 5 können spiegelbildlich zu den Adapterstücken 24 und 25 geformt sein, müssen es aber nicht. Falls der Tragrahmen einer Erntemaschine quer zur Fahrtrichtung eine unsymmetrische Form hat, können die Adapterstücke des anderen Seitenteils 5 auch andere Formen haben, so dass insgesamt vier verschiedene Adapterstücke zur Montage des Vorsatzmähtisches 1 an der Erntemaschine Verwendung finden, von denen jedes genau einem bestimmten Rahmenteil 18, 19, 21 oder 22 eines der Seitenteile 4 oder 5 zugeordnet ist. Es ist auch möglich, dass ausnahmsweise zur Anpassung eines Eingriffsabschnitts 21, 22 eines Seitenteils 4 nur ein einziges Adapterstück 24 oder 25 entweder an dem oberen Rahmenteil 21 oder an dem unteren Rahmenteil 22 ausreicht, so dass für beide Seitenteile 4 und 5 insgesamt nur zwei Adapterstücke benötigt werden. Die Grundform eines Keils oder Keilstumpfes ist bei allen Adapterstücken gegeben, wobei der Keilwinkel aber bei Bedarf auch ausnahmsweise Null sein kann, d.h. die Keilstumpfform zu einer Quaderform entartet sein kann.

Die erfindungsgemäße Anpassung der Befestigung eines Vorsatzmähtisches an unterschiedliche Erntemaschinen durch den Einsatz von Adapterstücken und die erfindungsgemäße Anpassung der Breite eines Vorsatzmähtisches an die Arbeitsbreiten unterschiedlicher Erntemaschinen durch einen modularen Aufbau des Horizontalteils sind Maßnahmen von eigenständiger vorteilhafter Wirkung im Sinne der eingangs genannten Aufgabenstellung der vorliegenden Erfindung, die jedoch auch miteinander kombiniert werden können, um die vorteilhafte Wirkung zu maximieren. Durch die Kombination beider Maßnahmen ergibt sich insgesamt ein Baukastensystem zur Realisierung eines Vorsatzmähtisches, der sich überwiegend aus Standardkomponenten zusammensetzt und nur einige wenige Spezialkomponenten zur Anpassung an unterschiedliche Erntemaschinen enthält.

Die Befestigung des erfindungsgemäßen Vorsatzmähtisches an einer Erntemaschine über die Seitenteile wurde vorausgehend nur anhand eines der beiden Seitenteile im Detail beschrieben. Grundsätzlich erfolgt die Befestigung auf der anderen Seite genauso, wobei die Adapterstücke auf beiden Seiten jeweils an die Formen der Vorsprünge des Tragrahmens der Erntemaschine angepasst sind.

## Patentansprüche

1. Vorsatzmähtisch (1) für eine Erntemaschine, mit einem Horizontalteil (2), an dessen Frontseite ein horizontales Schneidwerk (3) angeordnet ist, und mit zwei vertikalen Seitenteilen (4, 5), über welche der Vorsatzmähtisch (1) mit der Erntemaschine verbindbar ist, wobei ein Seitenteil (4)
jeweils einen seitlichen Tragrahmen mit einem Eingriffsabschnitt (21, 22) aufweist, der zum Eingriff mit einem Vorsprung eines Tragrahmens der Erntemaschine bestimmt ist, **dadurch gekennzeichnet,**
**dass** einem seitlichen Tragrahmen mindestens
ein Adapterstück (24; 25) zugeordnet ist, das an dem Eingriffsabschnitt (21, 22) befestigbar ist und dessen Form so an die Formen des Eingriffsabschnitts (21, 22) und des Vorsprungs angepasst ist, dass es im montierten Zustand des Vorsatzmähtisches (1) an der Erntemaschine eine Auflagefläche für den Vorsprung bildet.

2. Vorsatzmähtisch nach Anspruch 1, **dadurch gekennzeichnet, dass** der Eingriffsabschnitt (21, 22) eines Seitenteils (4) zwei Rahmenteile (21, 22) aufweist, die zusammen einen keilförmigen oder keilstumpfförmigen Aufnahmeraum (23) mit einem Öffnungswinkel für den Vorsprung des Rahmens der Erntemaschine definieren, dass das Adapterstück (24; 25) die Form eines Keils oder Keilstumpfes hat, und dass der Öffnungswinkel des Aufnahmeraumes (23) durch die Befestigung des Adapterstücks (24; 25) an dem Eingriffsabschnitt (21, 22) verändert wird.

3. Vorsatzmähtisch nach Anspruch 2, **dadurch gekennzeichnet, dass** einem seitlichen Tragrahmen jeweils zwei Adapterstücke (24; 25) zugeordnet sind, von denen jedes einem anderen der beiden Rahmenteile (21, 22), welche den Aufnahmeraum (23) definieren, zugeordnet ist.

4. Vorsatzmähtisch nach einem der Ansprüche 1 bis 3, **dadurch gekennzeichnet, dass** ein Adapterstück (24; 25) zwei Grundplatten (29, 30; 35, 36) und zwei trapezförmige Verbindungsplatten (31, 32; 37, 38), welche die Grundplatten (29, 30; 35, 36) miteinander verbinden, aufweist, wobei die Grundplatten (29, 30; 35, 36) in einem Winkel zueinander geneigt sind und die Verbindungsplatten (31, 32; 37, 38) durch ihre Trapezform den Neigungswinkel zwischen den Grundplatten (29, 30; 35, 36) definieren.

5. Vorsatzmähtisch nach Anspruch 4, **dadurch gekennzeichnet, dass** bei mindestens einem Adapterstück (24) ein entlang einer Verbindungsplatte (32) verlaufender Fortsatz (34) einer Grundplatte (30) seitlich über die ihm benachbarte Verbindungsplatte (32) hinausragt und sich schräg zu dem übrigen Abschnitt der Grundplatte (30) erstreckt, wobei er in einem Winkel von über 90° zu der ihm benachbarten Verbindungsplatte (32) steht.

6. Vorsatzmähtisch nach Anspruch 5, **dadurch gekennzeichnet, dass** an jedem der zwei Seitenteile (4, 5) jeweils ein Adapterstück mit einem seitlich schräg über eine der Verbindungsplatten hinausragenden Fortsatz an dem oberen Rahmenteil (18; 21) des Eingriffsabschnitts (18, 19; 21, 22) vorgesehen ist, wobei sich der schräg hinausragende Fortsatz im fertig montierten Zustand an der unteren Grundplatte befindet und zur Außenseite des jeweiligen Seitenteils (4; 5) sowie nach unten weist.

7. Vorsatzmähtisch nach einem der Ansprüche 1 bis 6, **dadurch gekennzeichnet, dass** an dem seitlichen Tragrahmen eines Seitenteils (4) jeweils eine Haltevorrichtung (26, 27, 28) zum Fixieren des jeweiligen Eingriffsabschnitts (21, 22) im Kontakt mit dem zugehörigen Vorsprung des Tragrahmens der Erntemaschine vorgesehen ist, wobei die Haltevorrichtung (26, 27, 28) ein Zugmittel (26) in Form einer Kette oder eines Seils, einen zum Eingriff mit dem Tragrahmen der Erntemaschine geeigneten Haken (27) und eine Spannvorrichtung (28) zum Spannen des Zugmittels (26) aufweist.

8. Vorsatzmähtisch nach einem der Ansprüche 1 bis 7, **dadurch gekennzeichnet, dass** das Horizontalteil (2) aus einer Vielzahl von miteinander verbundenen Modulen (7, 8, 9, 10, 11) besteht, wobei zumindest mehrere Grundmodule (7, 8, 9) fester Breite vorgesehen sind und zusätzlich zu den Grundmodulen (7, 8, 9) ein oder mehrere Erweiterungsmodule (10, 11) variabler Breite vorgesehen sein können, wodurch die Summe der Breiten der Grundmodule (7, 8, 9) eine Mindestbreite des Horizontalteils (2) definiert und die Breite des Horizontalteils (2) allein durch die Anzahl und/oder die Breite der Erweiterungsmodule (10, 11) einstellbar ist.

9. Vorsatzmähtisch nach Anspruch 8, **dadurch gekennzeichnet, dass** zu den Grundmodulen (7, 8, 9) zwei seitliche Endmodule (7, 8) gehören, die jeweils mit einem der beiden vertikalen Seitenteile (4, 5) verbunden sind.

10. Vorsatzmähtisch nach Anspruch 9, **dadurch gekennzeichnet, dass** zu den Grundmodulen (7, 8, 9) ein Mittelmodul (9) gehört, das symmetrisch in der Mitte des Horizontalteils (2) angeordnet ist.

11. Vorsatzmähtisch nach Anspruch 10, **dadurch gekennzeichnet, dass** jeweils eines von zwei gleichartigen Erweiterungsmodulen (10, 11) zwischen dem Mittelmodul (9) und jedem der zwei seitlichen Endmodule (10, 11) montierbar ist.

12. Vorsatzmähtisch nach einem der Ansprüche 1 bis 11, **dadurch gekennzeichnet, dass** er für das horizontale Schneidwerk (3) und/oder zusätzliche vertikale, an den Seitenteilen montierbare Schneidwerke einen hydraulischen Antrieb aufweist, und dass die Leitungen zur Verbindung von Komponenten des hydraulischen Antriebs in Form von Hochdruckschläuchen ausgeführt sind.

13. Vorsatzmähtisch nach einem der Ansprüche 1 bis 12, **dadurch gekennzeichnet, dass** an den Übergängen von den Seitenteilen (4, 5) zu dem Horizontalteil (2) flexible Dichtlippen (6) angeordnet sind.

## Claims

1. Header attachment (1) for a harvesting machine, comprising a horizontal part (2), on the front side of which a horizontal cutting unit (3) is arranged, and comprising two vertical side parts (4, 5) by means of which the header attachment (1) can be connected to the harvesting machine, a side part (4) comprising in each case a lateral support frame having an engagement portion (21, 22) which is intended to engage with a projection on a support frame of the harvesting machine, **characterised in that** at least one adapter piece (24; 25) is associated with a lateral support frame, can be fastened to the engagement portion (21, 22), and has a shape which is is adapted to the shapes of the engagement portion (21, 22) and the projection such that, when the header attachment (1) is mounted on the harvesting machine, the adapter piece forms a bearing surface for the projection.

2. Header attachment according to claim 1, **characterised in that** the engagement portion (21, 22) of a side part (4) comprises two frame parts (21, 22) which together define a wedge-shaped or truncated-wedge-shaped receiving space (23) having an opening angle for the projection of the frame of the harvesting machine, **in that** the adapter piece (24; 25) is in the form of a wedge or truncated wedge, and **in that** the opening angle of the receiving space (23) is modified by fastening the adapter piece (24; 25) to the engagement portion (21,22).

3. Header attachment according to claim 2, **characterised in that** two adapter pieces (24; 25) are associated with one lateral support frame in each case, each of which adapter piecesis associated with another of the two frame parts (21, 22) which define the receiving space (23).

4. Header attachment according to any of claims 1 to 3, **characterised in that** an adapter piece (24; 25) comprises two base plates (29, 30; 35, 36) and two trapezoidal connector plates (31, 32; 37, 38) which interconnect the base plates (29, 30; 35, 36), the base plates (29, 30; 35, 36) being inclined at an angle relative to one another and the connector plates (31, 32; 37, 38), owing to their trapezoidal shape, defining the angle of inclination between the base plates (29, 30; 35, 36).

5. Header attachment according to claim 4, **characterised in that**, in the case of at least one adapter piece (24), an extension (34), extending along a connector plate (32), of a base plate (30) protrudes laterally beyond the connector plate (32) adjacent thereto and extends obliquely to the remaining portion of the base plate (30), said extension being at an angle of more than 90° relative to the connector plate (32) adjacent thereto.

6. Header attachment according to claim 5, **characterised in that**, on each of the two side parts (4, 5), an adapter piece having an extension which obliquely protrudes laterally beyond one of the connector plates is provided in each case on the upper frame part (18; 21) of the engagement portion (18, 19; 21, 22), the obliquely protruding extension being located on the lower base plate when fully assembled and pointing towards the outer side of the respective side part (4; 5) and pointing downwards.

7. Header attachment according to any of claims 1 to 6, **characterised in that** in each case a retaining device (26, 27, 28) for securing the respective engagement portion (21, 22) in contact with the associated projection on the support frame of the harvesting machine is provided on the lateral support frame of a side part (4), the retaining device (26, 27, 28) comprising a traction mechanism (26) in the form of a chain or a cable, a hook (27) suitable for engagement with the support frame of the harvesting machine, and a clamping device (28) for clamping the traction mechanism (26).

8. Header attachment according to any of claims 1 to 7, **characterised in that** the horizontal part (2) consists of a large number of interconnected modules (7, 8, 9, 10, 11), at least a plurality of fixed-width base modules (7, 8, 9) being provided and, in addition to the base modules (7, 8, 9), one or more variable-width expansion modules (10, 11) being provided, as a result of which the sum of the widths of the base modules (7, 8, 9) defines a minimum width of the horizontal part (2) and it being possible to set the width of the horizontal part (2) by the number and/or width of the expansion modules (10, 11) alone.

9. Header attachment according to claim 8, **characterised in that** two lateral end modules (7, 8) form part of the base modules (7, 8, 9) and are connected in each case to one of the two vertical side parts (4, 5).

10. Header attachment according to claim 9, **characterised in that** a central module (9) forms part of the base modules (7, 8, 9) and is arranged symmetrically in the centre of the horizontal part (2).

11. Header attachment according to claim 10, **characterised in that** in each case one of two similar expansion modules (10, 11) can be mounted between the central module (9) and each of the two lateral end modules (10, 11).

12. Header attachment according to any of claims 1 to 11, **characterised in that** it comprises a hydraulic drive for the horizontal cutting unit (3) and/or for the additional vertical cutting units which can be mounted on the side parts, and **in that** the lines for connecting components of the hydraulic drive are in the form of high-pressure hoses.

13. Header attachment according to any of claims 1 to 12, **characterised in that** flexible sealing lips (6) are arranged at the regions of transition from the side parts (4, 5) to the horizontal part (2).

## Revendications

1. Plate-forme de coupe (1) pour une moissonneuse, comprenant une partie horizontale (2), au niveau du côté avant de laquelle un mécanisme de coupe (3) horizontal est disposé, et comprenant deux parties latérales verticales (4, 5), par l'intermédiaire desquelles la plate-forme de coupe (1) peut être reliée à la moissonneuse, sachant qu'une partie latérale (4) présente respectivement un cadre de support latéral pourvu d'une section de prise (21, 22), qui se destine à venir en prise avec une partie faisant saillie d'un cadre de support de la moissonneuse, **caractérisée en ce**
**qu'**est associé à un cadre de support latéral au moins un adaptateur (24 ; 25), qui peut être fixé au niveau de la section de prise (21, 22) et dont la forme est adaptée aux formes de la section de prise (21, 22) et de la partie faisant saillie de telle manière qu'il forme, dans l'état monté de la plate-forme de coupe (1) au niveau de la moissonneuse, une surface d'appui pour la partie faisant saillie.

2. Plate-forme de coupe selon la revendication 1, **caractérisée en ce que** la section de prise (21, 22) d'une partie latérale (4) présente deux parties de cadre (21, 22), qui définissent conjointement un espace de réception (23), en forme de coin ou de coin tronqué, pourvu d'un angle d'ouverture pour la partie faisant saillie du cadre de la moissonneuse, **en ce que** l'adaptateur (24 ; 25) a la forme d'un coin ou d'un coin tronqué, et **en ce que** l'angle d'ouverture de l'espace de réception (23) est modifié du fait de la fixation de l'adaptateur (24 ; 25) au niveau de la section de prise (21, 22).

3. Plate-forme de coupe selon la revendication 2, **caractérisée en ce que** respectivement deux adaptateurs (24 ; 25) sont associés à un cadre de support latéral, chaque adaptateur étant associé à une autre des deux parties de cadre (21, 22), qui définissent l'espace de réception (23).

4. Plate-forme de coupe selon l'une quelconque des revendications 1 à 3, **caractérisée en ce qu'**un adaptateur (24 ; 25) présente deux plaques de base (29, 30 ; 35, 36) et deux plaques de liaison (31, 32 ; 37, 38) de forme trapézoïdale, qui relient entre elles les plaques de base (29, 30 ; 35, 36), sachant que les plaques de base (29, 30 ; 35, 36) sont inclinées l'une par rapport à l'autre selon un angle et que les plaques de liaison (31, 32 ; 37, 38) définissent, du fait de leur forme trapézoïdale, l'angle d'inclinaison entre les plaques de base (29, 30 ; 35, 36).

5. Plate-forme de coupe selon la revendication 4, **caractérisée en ce qu'**un prolongement (34), s'étendant le long d'une plaque de liaison (32), d'une plaque de base (30) dépasse, dans le cas au moins d'un adaptateur (24), latéralement de la plaque de liaison (32) qui lui est adjacente et s'étend de manière oblique par rapport à la section restante de la plaque de base (30), sachant que le prolongement forme par rapport à la plaque de liaison (32) qui lui est adjacente un angle supérieur à 90°.

6. Plate-forme de coupe selon la revendication 5, **caractérisée en ce que** respectivement un adaptateur pourvu d'un prolongement, dépassant sur le côté de manière oblique d'une des plaques de liaison, au niveau de la partie de cadre (18 ; 21) supérieure de la section de prise (18, 19 ; 21, 22) est prévu au niveau de chacune des deux parties latérales (4, 5), sachant que le prolongement dépassant de manière oblique se trouve dans l'état finalisé au niveau de la plaque de base inférieure et pointe en direction du côté extérieur de la partie latérale (4 ; 5) respective ainsi que vers le bas.

7. Plate-forme de coupe selon l'une quelconque des revendications 1 à 6, **caractérisée en ce que** respectivement un dispositif de maintien (26, 27, 28) servant à fixer la section de prise (21, 22) respective de manière à établir un contact avec la partie faisant saillie associée du cadre de support de la moissonneuse est prévu au niveau du cadre de support latéral d'une partie latérale (4), sachant que le dispositif de maintien (26, 27, 28) présente un moyen de traction (26) sous la forme d'une chaîne ou d'un câble, un crochet (27) adapté pour venir en prise avec le cadre de support de la moissonneuse et un dispositif de serrage (28) servant à serrer le moyen de traction (26).

8. Plate-forme de coupe selon l'une quelconque des revendications 1 à 7, **caractérisée en ce que** la partie horizontale (2) est constituée d'une pluralité de modules (7, 8, 9, 10, 11) reliés les uns aux autres, sachant qu'au moins plusieurs modules de base (7, 8, 9) à largeur fixe sont prévus et qu'il est possible de prévoir en plus des modules de base (7, 8, 9) un ou plusieurs modules d'extension (10, 11) à largeur variable, ce qui permet de définir par la somme des largeurs des modules de base (7, 8, 9) une largeur minimale de la partie horizontale (2) et ce qui permet de régler la largeur de la partie horizontale (2) seulement par le nombre et/ou la largeur des modules d'extension (10, 11).

9. Plate-forme de coupe selon la revendication 8, **caractérisée en ce que** relèvent des modules de base (7, 8, 9) deux modules d'extrémité latéraux (7, 8), qui sont reliés respectivement à l'une des deux parties latérales (4, 5) verticales.

10. Plate-forme de coupe selon la revendication 9, **caractérisée en ce que** relève des modules de base (7, 8, 9) un module central (9), qui est disposé de manière symétrique au centre de la partie horizontale (2) .

11. Plate-forme de coupe selon la revendication 10, **caractérisée en ce qu'**un de deux modules d'extension (10, 11) de même type peut être monté respectivement entre le module central (9) et chacun des deux modules d'extrémité latéraux (10, 11).

12. Plate-forme de coupe selon l'une quelconque des revendications 1 à 11, **caractérisée en ce que** ladite plate-forme de coupe présente un entraînement hydraulique pour le mécanisme de coupe (3) horizontal et/ou pour des mécanismes de coupe supplémentaires verticaux pouvant être montés au niveau des parties latérales, et **en ce que** les lignes servant à relier des composants de l'entraînement hydraulique sont réalisées sous la forme de tuyaux flexibles haute pression.

13. Plate-forme de coupe selon l'une quelconque des revendications 1 à 12, **caractérisée en ce que** des lèvres d'étanchéité (6) flexibles sont disposées au niveau des passages allant des parties latérales (4, 5) vers la partie horizontale (2).
